Europäisches Patentamt

European Patent Office

Office européen des brevets

(11) Publication number: **0 140 422**
**B1**

(12) **EUROPEAN PATENT SPECIFICATION**

(45) Date of publication of patent specification: **13.04.88**

(51) Int. Cl.⁴: **C 08 L 25/16, C 08 L 35/06**

(21) Application number: **84201380.7**

(22) Date of filing: **27.09.84**

(54) Process for preparing an impact-resistant thermoplastic moulding compound.

(30) Priority: **01.10.83 NL 8303377**

(43) Date of publication of application:
**08.05.85 Bulletin 85/19**

(45) Publication of the grant of the patent:
**13.04.88 Bulletin 88/15**

(84) Designated Contracting States:
**AT BE CH DE FR GB IT LI NL SE**

(56) References cited:
**DE-A-3 140 564**
**DE-A-3 140 565**
**DE-A-3 140 566**

(73) Proprietor: **STAMICARBON B.V.**
**Mijnweg 1**
**NL-6167 AC Geleen (NL)**

(72) Inventor: **Schepers, Herman Augustinus**
**Johannes**
**Leentstraat 33**
**NL-6171 LC Stein (L.) (NL)**
Inventor: **Debets, Wilhelmus Antonius Marie**
**Dr. Philipsstraat 91**
**NL-6136 XX Sittard (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

# 0 140 422

**Description**

The invention relates to a process for preparing an impact-resistant moulding compound based on a copolymer consisting of styrene and/or α-methylstyrene and maleic anhydride (MA).

Copolymers from styrene and maleic anhydride are known (SMA). The preparation of these copolymers can be effected batchwise, as well as through continuous processes. The first commercially available SMA copolymers were low-molecular products with molecular weights lower than 5000. These grades were used in, for instance, floor shampoos, floor waxes, emulsion paints and dispersing agents.

In addition to these low-molecular products, the high-molecular SMA copolymers are important, for instance in the automotive industry and in domestic articles.

As a result of the copolymerization of styrene with MA, SMA has a greater dimensional stability under heat than polystyrene and styrene-acrylonitrile copolymers, which may be very advantageous. Owing to the high softening temperature (approx. 220°C), it is not easy, however, to process these copolymers through extrusion and injection moulding.

Moreover, the mechanical properties like impact resistance and rigidity are insufficient. SMA itself is very brittle, but by the incorporation of a rubber it can be made impact-resistant; this process, however, involves a lowering of the rigidity.

In order to solve the said problems, a number of solutions have already been proposed. To this end see, for instance, the GB—A—1315219 describing mixtures consisting of a copolymer of maleic anhydride, styrene and acrylonitrile, a copolymer from styrene and acrylonitrile and a graft copolymer of a mixture from styrene and acrylonitrile grafted on a rubber. In the GB—A—1316330 a mixture of styrene-acrylonitrile copolymer with a styrene-maleic anhydride copolymer is described.

US—A—3322853 describes a mixture consisting of a hydroxylated diene rubber, a styrene maleic anhydride copolymer having a low molecular weight and a polyepoxide. This mixture comprises diene rubbers and polyepoxides and is used as coating or adhesive. The UV resistance and oxidation stability of this mixture are not quite satisfactory.

From the DE—A—3140565 laid open to public inspection a moulding compound is known consisting of 50 to 90% (wt.) of a copolymer consisting of 65 to 95% (wt.) of a monovinylaromatic monomer and 5 to 35% (wt.) of an unsaturated dicarboxylic anhydride and of 10 to 50% (wt.) of a rubber composed from a monomer from the group of the conjugated dienes, alkylacrylates, monovinyl aromatics, vinyl ethers or ethylene, propylene and a non-conjugated diene and further an ethylene unsaturated monomer with an —OH, —SH or —NHR group.

The moulding compound according to this DE—A, however, shows a low impact resistance.

The object of the invention is to provide a process for preparing an impact-resistant thermoplastic moulding compound based on a copolymer of styrene and/or α-methylstyrene and maleic anhydride which does not have the said disadvantages.

The process according to the invention in which the moulding compound is prepared by mixing 50—95% (wt.) of a copolymer consisting of:

1. 50—95 (wt.) styrene and/or α-methylstyrene
2. 50—5% (wt.) maleic anhydride
3. 0—20% (wt.) acrylate
4. 0—20% (wt.) acrylonitrile

with 5—50% (wt.) rubber modified with hydroxyl groups is characterized in that the copolymer with a molecular weight between 30.000 and 500.000 and the modified rubber are mixed in the presence of 0,01—10 parts by weight, calculated on 100 parts by weight copolymer and modified rubber, of a reaction accelerator which is a salt of a metal from groups II and III and a saturated or unsaturated fatty acid with 10—20 carbon atoms or an organic metal compound of a metal from group IV and an oxygen containing organic compound, at a temperature between 160°C and 290°C and whereby 0—30% (wt.) unmodified rubber is present.

To this mixture the usual additives can be added, such as stabilizers, antioxidants, antistatics, lubricants, fillers, colourants, pigments, etc.

Surprisingly it has been found that such a process results in a moulding compound showing an excellent impact resistance and rigidity.

The reaction accelerator used is preferably magnesium stearate, calciumstearate, zincstearate, aluminiumstearate, cadmiumstearate and/or bariumstearate or an oxygen containing organic compound such as dibutyltrimaleide and/or tetrabutoxytitanium.

The copolymer based on styrene and/or α-methylstyrene and maleic anhydride consists of:

50—95% (wt.) styrene and/or α-methylstyrene
50—5% (wt.) maleic anhydride
0—20% (wt.) acrylate
0—20% (wt.) acrylonitrile,

and preferably of

65—90% (wt.) styrene and/or α-methylstyrene
10—35% (wt.) maleic anhydride.

2

The copolymers used in the invention have a weight-average molecular weight between 30,000 and 500,000 and preferably between 100,000 and 400,000.

The weight average molecular weight can be determined through a method described in Journal of Applied Polymer Science, Vol. 20, 1619—1626 (1976).

By determining the intrinsic viscosity at 25.0°C in tetrahydrofuran a method has been developed for determining the weight average molecular weight (=$M_w$) by a single calibration curve. For MA percentages of 5—50 moles % and an $M_w$ range of $2\times10^4$ to $7\times10^6$ the following equation is applicable:

$$[\eta]=3.98 \cdot 10^{-4} \cdot M_w\ 0.596,$$

where:

$\eta$=intrinsic viscosity

$M_w$=weight average molecular weight.

The copolymers of styrene and/or α-methylstyrene and maleic anhydride are known per se and are described in literature. Generally they are prepared according to customary processes for, for instance, mass polymerization or polymerization in solution. This copolymers of styrene and maleic anhydride can, for instance, be obtained by reacting the two monomers, styrene and maleic anhydride, with each other in the presence of benzoyl peroxide. The polymerization rate can be better controlled when a solvent is used, for instance acetone, toluene, xylene, dioxane or methyl ethyl ketone.

A 50:50 (molar)—copolymer is obtained, for instance, by discontinuous copolymerization of styrene and maleic anhydride, for instance by precipitation polymerization of styrene and maleic anhydride in aromatic solvents. Copolymers having less maleic anhydride can be obtained if in a continuous copolymerization process a mixture of much styrene and little maleic anhydride is fed into a polymerization vessel while being stirred vigorously at high temperature and at the same time the same quantity of polymerization mixture is removed from the vessel (A. W. Hanson and R. L. Zimmermann, Industrial Engineering Chemistry 49, page 1803, 1957).

As terpolymer the styrene-maleic anhydride copolymer may contain 0—20% (wt.) acrylonitrile or an acrylate such as methyl methacrylate or ethyl acrylate. The terpolymer preferably contains a minimum of 5% (wt.) acrylonitrile.

In principle all rubbers modified with hydroxyl groups can be used. Preferably, as rubbery largely saturated polymers rubbers can be used having few or no unsaturations in their main chains, i.e. having fewer than 2 and preferably fewer than 1.5 double bonds per 1000 carbon atoms. However, the rubbers may have unsaturation in the side chains, which unsaturation can be used, for instance, for crosslinking.

The rubbers suitable to be used according to the process of the invention are ethylene-propylene copolymers (the so-called EF rubbers) and ethylene-propylene copolymers in which other polyunsaturated monomers have been copolymerized also (the so-called EPT rubbers), or mixtures of two or more of these rubbers. Examples of these polyunsaturated monomers include hexadiene-1,4 dicyclopentadiene, tricyclopentadiene, 5-vinylnorbornene-2, 5-ethylidene-norbornene-2, 5-methylenenorbornene-2, 5-(2-propenyl)norbornene-2, 5-(5-hexenyl)norbornene-2, 4,7,8,9-tetrahydroindene and isopropylidenetetrahydroindene. For the preparation of these rubbers see, for instance, the NL—AA—6806893 and 300585 laid open to public inspection.

Other rubbers that can be used are polyacrylate, polybutylene, polyethylenevinylacetate and polybutadiene or mixtures hereof.

The rubbers used are modified with hydroxyl groups.

The hydroxyl groups can be incorporated in the rubbers via a number of processes.

One process is by grafting the rubber with a hydroxyl-functional monomer, such as 2-hydroxyethylacrylate, 2-hydroxypropylacrylate and the corresponding methacrylates or alcohols, such as allylalcohol and vinylbenzylalcohol.

The hydroxyl groups can be incorporated also in the rubbers by copolymerization of suitable monomers or by chemical modifications of the polymer. The incorporation of the functional groups by copolymerization can be effected in an emulsion-free radical polymerization system, while the incorporation of the functional groups by chemical modification can be effected with polymers prepared by emulsion-free radical polymerization. Suitable copolymerizable monomers include hydroxyethylmethacrylate, hydroxyethylacrylate, hydroxypropylacrylate or methacrylate, hydroxypropylcrotonate, di(2-hydroxyethyl)maleate, di(2-hydroxyethyl)fumarate, N-ethanolacrylamide, hydroxyethylvinylether and di-ethyleneglycolmonovinylether. A suitable chemical modification may comprise a partial epoxidation, followed by reduction of carbon-carbon double bonds in a polymer containing an unsaturation, treatment with an alkalimetalalkyl compound, such as butyllithium, followed by hydrolysis and hydrolysis of halogen groups in a polymer molecule.

Other possibilities are esterifications of a carboxyl-functional polymer such as ethylene-propylene-acrylate terpolymer with a diol and oxidation of EPT to 1.2 diol.

The number of OH groups in the rubber is generally more than 0,01% preferably 0,05 to 10% (wt.).

The reaction accelerator is mixed together with the rubber modified with hydroxyl groups and with the SMA in a usual mixing device such as a roll mill, single or twin-screw extruder, impeller mixer, Banbury mixer, etc.

The reaction accelerator can be added also during the reaction. The components are mixed at temperatures between 160°C and 290°C.

The moulding compound is suitable for many applications. Thus many objects can be produced from it such as, for instance, tubes bottles, furniture, dashboards for motor cars, casings and housings for electronic and domestic apparatuses, shoe heels, caravans, skis and surf boards.

The invention is further elucidated by means of the following examples and comparative experiments without being limited thereto.

Examples 1 up to and including 9 and Comparative Example a

To a roll mill consisting of two rolls, diameter 80 mm and width 200 mm, with a friction of 1:1.2, were supplied:

— 45 parts by weight SMA (MA content 14% (wt.) and Mw 250,000),
— 15 parts by weight OH-modified EPT,
— 0.25 parts by weight octadecyl-3-(3,5-di-ter-butyl-4-hydroxyphenyl) propionate as stabilizer.

To this mixture a certain quantity of reaction accelerator was added.

The components were subsequently mixed for 20 minutes at a temperature of 180°C or 200°C and a speed of 35 rpm.

The EPT rubber has been modified with hydroxyl groups by grafting allylalcohol in a 10% xylene solution of the EPT rubber.

These examples illustrate the influence of different kinds and quantities of reaction accelerator at different temperatures on the properties of the polymer composition.

Of the moulding compounds obtained the:

— impact resistance according to ASTM-D-256,
— rigidity according to ASTM-D-790,
— HDT, unannealed, according to ASTM-D-648 were determined.

| Example | SMA pts.wt | OH-EPT pts.wt | Reaction accelerator pts.wt | Reaction temp. °C | Impact resist. kJ/m$^2$ | Rigidity N/mm$^2$ | HDT °C |
|---------|-----------|---------------|------------------------------|--------------------|--------------------------|--------------------|--------|
| a | 45 | 15 | — | 200 | 2 | 1700 | 108 |
| 1 | 45 | 15 | 0.6 magnesium stearate | 200 | 18 | 1500 | 108 |
| 2 | 45 | 15 | 0.6 magnesium stearate | 180 | 22 | 1500 | 108 |
| 3 | 45 | 15 | 0.2 dibutyl-tinmaleate | 180 | 22 | 1480 | 108 |
| 4 | 45 | 15 | 0.6 zinc-stearate | 180 | 20 | 1500 | 108 |
| 5 | 45 | 15 | 0.6 aluminium stearate | 180 | 17 | 1490 | 108 |
| 6 | 45 | 15 | 0.4 calcium stearate | 180 | 19 | 1500 | 108 |
| 7 | 45 | 15 | 0.6 barium stearate | 180 | 22 | 1500 | 108 |
| 8 | 45 | 15 | 0.6 tetrabutoxy-titanium | 180 | 21 | 1520 | 108 |
| 9 | 45 | 15 | 1,2 copolymer of ethylene and acrylic acid neutralized with zinc | 180 | 9 | 1760 | 108 |

**Claims**

1. Process for preparing an impact resistant thermoplastic moulding compound by mixing 50—95% (wt.) of a copolymer consisting of
   1. 50—95% (wt.) styrene and/or α-methylstyrene
   2. 50—5%  (wt.) maleic anhydride
   3. 0—20% (wt.) acrylate
   4. 0—20% (wt.) acrylonitrile

with 5—50% (wt.) rubber modified with hydroxyl groups characterized in that the copolymer with a molecular weight between 30.000 and 500.000 and the modified rubber are mixed in the presence of 0,01—10 parts by weight, calculated on 100 parts by weight copolymer and modified rubber, of a reaction accelerator which is a salt of a metal from groups II and III and a saturated or unsaturated fatty acid with 10—20 carbon atoms or an organic metal compound of a metal from group IV and an oxygen containing organic compound, at a temperature between 160°C and 290°C and whereby 0—30% (wt.) unmodified rubber is present.

2. Process according to claim 1, characterized in that the reaction accelerator is magnesiumstearate, calciumstearate, cadmiumstearate, bariumstearate, aluminiumstearate and/or zincstearate.

3. Process according to claim 1, characterized in that the reaction accelerator based on an organic metal compound is dibutyltinmaleate and/or tetrabutoxytitanium.

4. Process according to claims 1—3, characterized in that the rubber applied is ethylene-propylene rubber, ethylene-propylene-diene rubber, polyarylate, polybutadiene, polybutylene or polyethylenevinylacetate or mixtures.

5. Process according to claims 1—4, characterized in that the hydroxylmodified rubber contains 0.05—10% (wt.) hydroxyl groups.

6. Process according to claims 1—5, characterized in that the copolymer contains 65—90% (wt.) styrene and 10—35% (wt.) maleic anhydride.

7. Object wholly or partly produced from a moulding compound obtained while applying any one of claims 1—6.

**Patentansprüche**

1. Verfahren zur Herstellung einer schlagzähen thermoplastischen Formmasse durch Vermischen von 50—95% (Ma) eines Copolymers bestehend aus
   1. 50—95% (Ma) Styrol und/oder α-Methylstyrol
   2. 50—5%  (Ma) Maleinsäureanhydrid
   3. 0—20% (Ma) Acrylat
   4. 0—20% (Ma) acrylnitril

mit 5—50% (Ma) Kautschuk, modifiziert mit Hydroxylgruppen, dadurch gekennzeichnet, daß das Copolymer mit einer Molekularmasse zwischen 30.000 und 500.000 und der modifizierte Kautschuk in Gegenwart von 0,01—10 Massenteilen, berechnet auf 100 Massenteile Copolymer und modifiziertem Kautschuk, eines Reaktionsbeschleunigers, welcher ein Salze ines Metalles der Gruppen II und III und einer gesättigten oder ungesättigten Fettsäure mit 10—20 Kohlenstoffatomen oder eine organische Metallverbindung eines Metalles der Gruppe IV und einer sauerstoffhaltigen organischen Verbindung ist, bei einer Temperatur zwischen 160°C und 290°C vermischt werden, wobei 0—30% (Ma) nicht-modifizierter Kautschuk zugegen sind.

2. Verfahren nach Anspruch 1, dadurch gekennzeichnet, daß der Reaktionsbeschleuniger Magnesiumstearat, Calciumstearat, Cadmiumstearat, Bariumstearat, Aluminiumstearat und/oder Zinkstearat ist.

3. Verfahren nach Anspruch 1, dadurch gekennzeichnet, daß der Reaktionsbeschleuniger auf der Basis einer organischen Metallverbindung Dibutylzinnmaleat und/oder Tetrabutoxytitan ist.

4. Verfahren nach Anspruch 1, dadurch gekennzeichnet, daß der eingesetzte Kautschuk Ethylen-Propylenkautschuk, Ethylen-Propylen-Dienkautschuk, Polyacrylat, Polybutadien oder Polyethylenvinylacetat oder Gemische hiervon ist.

5. Verfahren nach den Ansprüchen 1—4, dadurch gekennzeichnet, daß der hydroxylmodifizierte Kautschuk 0,05—10% (Ma) Hydroxylgruppen enthält.

6. Verfahren nach den Ansprüchen 1—5, dadurch gekennzeichnet, daß das Copolymer 65—90% (Ma) Styrol und 10—35% (Ma) Maleinsäureanhydrid enthält.

7. Gegenstand, zur Gänze oder teilweise hergestellt aus einer Formmasse erhalten nach einem der Ansprüche 1—6.

**Revendications**

1. Procédé de préparation d'un composé de moulage thermoplastique résistant au choc, consistant à mélanger 50 à 95% en poids d'un copolymère comprenant:
   1. 50 à 95% en poids de styrène et/ou d'alpha-méthylstyrène,
   2. 50 à 5%  en poids d'anhydride maléique,

3. 0 à 20% en poids d'acrylate,

4. 0 à 20% en poids d'acrylonitrile,

avec 5 à 50% en poids de caoutchouc modifié par des groupes hydroxyle, caractérisé en ce qu'on mélange le copolymère ayant une masse moléculaire comprise entre 30.000 et 500.000 et le caoutchouc modifié en présence de 0,01 à 10 parties en poids, par rapport à 100 parties en poids du copolymère et du caoutchouc modifié, d'un accélérateur de réaction qui est un sel d'un métal des groupes II et III et d'un acide gras saturé ou insaturé avec 10 à 20 atomes de carbone ou un composé métallique organique d'un métal du Groupe IV et d'un composé organique contenant de l'oxygène à une température de 160 à 290°C et en présence de 0 à 30% en poids de caoutchouc non modifié.

2. Procédé selon la revendication 1, caractérisé en ce que l'accélérateur de réaction est le séarate de magnésium, le stéarate de calcium, le stéarate de cadmium, le stéarate de baryum, le stéarate d'aluminium, et/ou le stéarate de zinc.

3. Procédé selon la revendication 1, caractérisé en ce que l'accélérateur de réaction à base d'un composé métallique organique est le maléate de dibutylétain et/ou le tétrabutoxytitane.

4. Procédé selon les revendications 1 à 3, caractérisé en ce que le caoutchouc appliqué est un caoutchouc éthylène/propylène, un caoutchouc éthylène-propylène-diène, un polyarylate, un polybutadiène, le polybutylène ou le polyéthylène/acétate de vinyle ou des mélanges de ceux-ci.

5. Procédé selon les revendications 1 à 4, caractérisé en ce que le caoutchouc modifié par hydroxyle contient de 0,05 à 10% en poids de groupes hydroxyle.

6. Procédé selon les revendications 1 à 5, caractérisé en ce que le copolymère contient 65 à 90% en poids de styrène et 10 à 35% en poids d'anhydride maléique.

7. Article produit en totalité ou en partie à partir d'un composé de moulage qu'on obtient par l'application de l'une quelconque des revendications 1 à 6.